# FASCICULE DE BREVET EUROPEEN

(11) **EP 3 851 995 B1**
(45) Date de publication et mention de la délivrance du brevet: **22.02.2023**
(21) Numéro de dépôt: 21151895.6
(22) Date de dépôt: 15.01.2021
(51) Int. Cl.: G06F 21/73, G09C 1/00, H04L 9/32

(54) **PROCÉDÉ POUR GÉNÉRER UNE DONNEÉ UNIQUE PROPRE À UN CIRCUIT INTEGRÉ EN SILICIUM**
VERFAHREN ZUR ERZEUGUNG EINE EINMALIGE DATEN, DIE FÜR EINEN INTEGRIERTEN SILIKONKREIS SPEZIFISCH IST
METHOD FOR GENERATING A UNIQUE DATA SPECIFIC TO AN INTEGRATED SILICON CIRCUIT

(30) Priorité: 17.01.2020 FR 2000491
(43) Date de publication de la demande: 21.07.2021
(73) Titulaire: IC'ALPS, 38240 Meylan (FR); CNRS, 75794 Paris Cedex 16 (FR); Institut Polytechnique de Grenoble, 38000 Grenoble (FR); Université Grenoble Alpes, 38400 Saint Martin d'Hères (FR)
(72) Inventeur: GIMENEZ, GREGOIRE, 38000 GRENOBLE (FR); CHERKAOUI, ABDELKARIM, 38110 CESSIEU (FR); FESQUET, LAURENT, 38360 SASSENAGE (FR)
(74) Mandataire: Roman, Alexis

(56) Documents cités:
- WO-A1-2015/031683
- US-B2- 7 757 083

## Description

### [Domaine technique.

L'invention concerne un procédé pour générer une donnée unique propre à un circuit intégré en silicium. Elle concerne également un circuit intégré ainsi qu'une utilisation spécifique de ce circuit.

Le domaine de l'invention concerne notamment la sécurisation des circuits intégrés, et l'identification et/ou l'authentification de composants électroniques.

### État de la technique.

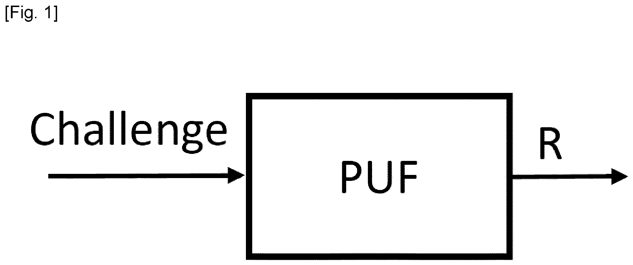

Le processus de fabrication d'un circuit intégré en silicium entraine obligatoirement de petites variations entre les circuits. Ces variations se traduisent par exemple par la propagation plus ou moins longue des signaux électriques à l'intérieur du circuit. Aussi, il est avantageux de pouvoir caractériser de manière unique un circuit parmi une série de circuits issus de la même chaine de fabrication. Cette identification peut être réalisée grâce à une caractéristique physique intrinsèque au circuit intégré extraite par l'application d'une fonction physiquement non clonable PUF (pour l'acronyme anglais « *Physically Unclonable Function* »). Cette caractéristique est l'équivalent d'une empreinte digitale propre au circuit et peut notamment être utilisée pour l'identification et/ou l'authentification de matériel électronique, le stockage sécurisé de clés de chiffrement, un couplage matériel-logiciel, la lutte contre la contrefaçon, etc. La figure 1 est un diagramme illustrant le fonctionnement d'une PUF. Quand elle est stimulée par un vecteur de données, appelé challenge C, la PUF génère une réponse R qui est unique est qui dépend des caractéristiques de fabrication intrinsèques du circuit.

Les différentes fonctionnalités d'une PUF peuvent être réalisées à l'aide de dispositifs plus ou moins sécurisés ou coûteux en termes de performance/consommation/surface, par exemple : fusibles, mémoire sécurisé avec brouillage (scrambling en anglais) et chiffrement, ensemble de capteurs et de dispositifs permettant de détecter des tentatives de lecture des secrets du circuit intégré au travers d'accès physique (ingénierie inverse), etc.

D'autre part, les PUF sont bien connues de l'art antérieur et permettent de mesurer un ou plusieurs paramètres (tension de seuil de transistor, résistance d'une ligne de métal, capacité parasite...) liés à la fabrication des circuits intégrés, qui sont susceptibles de caractériser de manière unique chaque circuit.

Des PUF sont notamment décrites dans les documents brevets US7757083 (Devadas), US7840803 (Clarke), US8630410 (Suh), US8867739 (Danger) ou encore US10027482 (Maccheti). Le document WO 2015/031683, 5 mars 2015 (2015-03-05), propose un PUF de délai intégré à un circuit HELP qui exploite l'entropie en surveillant la stabilité du chemin et en mesurant les retards de chemin à partir des macros logiques de base.

Ces PUF connues de l'art antérieur présentent un certain nombre d'inconvénients :
- Latence significative en lecture, pour les PUF dit dynamiques (mesure d'un paramètre électrique - courant, résistance, ... - qui n'est a *priori* pas observable statiquement). Dans ce cas, les mesures sont souvent imprécises et bruitées. Elles sont assez longues (de l'ordre de la microseconde) et doivent être répétées de nombreuses fois et moyennées pour être assez stables.
- Surconsommation d'énergie électrique, liée à la nécessité d'ajouter du matériel de post-traitement et/ou de correction d'erreurs pour obtenir des mesures stables, quelles que soient les conditions d'opération (tension et température).
- Surface, ou taille du circuit, importante (donc plus chère et avec une consommation énergétique plus importante), due à la faible efficacité d'extraction de l'information des sources de variabilité utilisées. Dans ce cas, il faut multiplier le nombre de sources pour atteindre le nombre de bits voulus pour la clé de chiffrement ou l'identifiant.
- Vulnérabilité aux attaques physiques d'ingénierie inverse. Certaines PUF utilisent des structures « statiques » (par exemple : probabilité de fabrication correcte d'un via - trou métallisé qui permet d'établir une liaison électrique entre deux couches). Mais ces structures sont visibles et peuvent donc être copiées facilement. D'autres PUF utilisent l'état initial d'une mémoire comme source d'entropie (chaque bit de la mémoire se stabilise à 0 ou 1, un certain temps après la mise sous tension du circuit ; cet état du plan mémoire au démarrage est caractéristique de chaque mémoire et donc de chaque circuit). Lorsque le circuit est éteint, le secret n'est pas lisible, car il est caché dans la nanostructure des transistors qui composent la mémoire. Mais dès lors que la mémoire est alimentée, le secret est automatiquement extrait et est stocké électriquement dans la mémoire. Il devient plus facilement accessible (« lisible ») à un attaquant possédant l'outillage nécessaire (par exemple, attaque à l'aide de laser).
- Vulnérabilité aux attaques dites par canaux cachés. Ces attaques consistent à observer le comportement du circuit intégré et à exploiter les informations qu'il émet sur des canaux auxiliaires (consommation électrique, rayonnement électromagnétique, temps de calcul...) pour en déduire les secrets qu'il manipule. Les temps de mesures importants pour les PUF classiques augmentent la largeur de la fenêtre d'attaque.

La mise en oeuvre des PUF se base généralement sur l'analyse de variations de délais pour caractériser et identifier le circuit. On utilise couramment une mesure de la fréquence (nombre d'événements sur une période donnée) de différents oscillateurs. On parle souvent de RO-PUF (pour l'acronyme anglais « Ring Oscillator » PUF). Cette mesure en fréquence, pour être précise, nécessite de comptabiliser le nombre d'événements sur une longue période. La latence de réponse est donc élevée. Pour être stables, ces mesures doivent aussi être différentielles (entre deux oscillateurs) et faire une comparaison simple (quel est l'oscillateur le plus rapide ?). Au final ces solutions demandent donc au minimum deux oscillateurs pour extraire un seul bit d'entropie (des solutions avec 4 ou 8 oscillateurs par bit sont même envisagées pour augmenter la stabilité des mesures).

On connait par le document brevet WO2015/031683 (STC UNM), un procédé pour générer une donnée unique propre à un circuit intégré au moyen d'une PUF, la mise en oeuvre de la fonction PUF comprend une étape consistant à mesurer, au moyen d'un convertisseur TDC, la différence entre : - i) l'instant d'arrivée d'un premier évènement d'un signal à une entrée du convertisseur TDC et, - ii) l'instant d'arrivée d'un second évènement d'un signal à une entrée du convertisseur TDC, lequel second évènement est généré par le circuit de retard. Ce type de solution fait toutefois apparaître un certain déterminisme dans la réponse de la PUF. Ce déterminisme provient notamment des variations amenées par les chemins de propagation entre la source du signal d'activation et le TDC, lesquelles variations influent sur l'unicité de la donnée unique (ou réponse) générée par la PUF. Les données uniques (ou réponses) générées par plusieurs circuits intégrés embarquant cette même PUF peuvent alors présenter une certaine corrélation propice aux attaques.

Un objectif de l'invention est de remédier à tout ou partie des inconvénients précités.

### Présentation de l'invention.

L'invention revendiquée concerne un procédé et un circuit comme défini dans les revendications 1 et 6, respectivement. Les revendications dépendantes concernent des modes de réalisation avantageuses.

La solution proposée par l'invention est un procédé pour générer une donnée unique propre à un circuit intégré en silicium, ladite donnée étant générée par l'application d'une fonction physiquement non clonable PUF dudit circuit, lequel circuit comporte également un circuit de retard. La mise en oeuvre de la fonction PUF comprend une étape consistant à mesurer, au moyen d'un convertisseur de temps numérique (ci-après « TDC » pour l'acronyme anglais Time-to-digital converter), la différence entre :
- i) l'instant d'arrivée d'un premier évènement d'un signal à une entrée du TDC et,
- ii) l'instant d'arrivée d'un second évènement d'un signal à une entrée du TDC, le second évènement étant généré par le circuit de retard.

Le procédé comprend en outre les étapes supplémentaires consistant à :
- générer, au moyen d'au moins un générateur comportant le circuit de retard, un signal sous la forme d'une double impulsion ou de multiples impulsions,
- transformer ledit signal de manière à ce que le premier évènement et le second évènement appartiennent audit signal transformé

L'invention permet de générer la donnée unique propre au circuit, de manière optimale, notamment en termes de rapidité et de consommation d'énergie. On mesure de façon très précise le temps de propagation de signaux identiques aux variations de fabrication près, au travers d'un ou plusieurs circuits de retard. Les différences de temps de propagation dans le ou les circuits de retards permettent notamment de construire une signature ou un autre identifiant unique du circuit.

L'invention se base sur la mesure de délais pour caractériser et identifier le circuit intégré. On réalise une mesure directe des délais et non pas une mesure de fréquence. La mesure directe du délai se fait à l'aide d'un TDC, sans passage par le domaine fréquentiel. L'utilisation d'un TDC très précis est possible avec un coût en surface et une consommation raisonnable. Cette mesure est précise et rapide (environ 10 ns) et permet donc de gagner un ou deux ordres de grandeur sur la latence des autres PUF et notamment des RO-PUF.

Il est aussi possible d'extraire plusieurs bits d'entropie à chaque mesure. En effet, le résultat de la comparaison entre deux délais ne sera pas binaire (qui est le plus grand des deux délais ?), mais pourra être exprimé sur plusieurs bits en calculant la différence entre deux délais. Ainsi un nombre de circuits de retard moins important permet d'extraire un même nombre de bits. On peut donc réduire la surface de la PUF par un facteur deux ou trois, et de fait réduire la taille du circuit intégré.

L'invention permet en outre d'obtenir des mesures stables. En effet, grâce aux mesures rapides des délais, celles-ci sont moins sujettes aux variations de température, et de manière plus générale, sont moins sensibles aux conditions d'utilisation du circuit intégré.

De plus, du fait de la mesure directe des délais, les risques de fuites d'information par attaques par canaux cachés sont très réduits. Il est donc plus difficile à une personne malveillante de retrouver l'information cachée dans le circuit intégré en observant celui-ci de manière non intrusive. Cela n'est pas le cas pour les solutions classiques dans lesquelles la durée de mesure importante expose le rayonnement électromagnétique et la consommation des sources d'entropie (oscillateurs) pendant plus longtemps.

Enfin, la génération d'un signal double impulsion ou multiples impulsions, combinée à la transformation dudit signal, permet d'annuler, ou à tout le moins de limiter, tout déterminisme dans la réponse du PUF. Toutes les variations amenées par les chemins de propagation entre la source du signal d'activation et le TDC sont communes à toutes les sources/challenges et n'influent pas sur l'unicité de la réponse. Cette dernière est alors plus robuste aux attaques. En propageant plusieurs impulsions dans le circuit, on s'affranchit des problèmes de déformation lié à la propagation, notamment de la distance entre les sources/challenges et le TDC qui peuvent impacter les réponses du PUF (impact sur la "randomness"). Cet impact est accentué lorsque la taille de la banque d'entropie augmente (le nombre de générateurs). Grâce à l'apport de l'invention, on vient sélectionner, au niveau du TDC (une fois que la distance est « parcourue »), les deux fronts qui vont définir le début et la fin de la mesure.

D'autres caractéristiques avantageuses de l'invention sont listées ci-dessous. Chacune de ces caractéristiques peut être considérée seule ou en combinaison avec les caractéristiques du procédé définies ci-dessus (notamment les caractéristiques supplémentaires), et faire l'objet, le cas échéant, d'une ou plusieurs demandes de brevet divisionnaires :
- Selon un mode de réalisation non couvert par les revendications, le premier évènement appartient à un premier signal et le second évènement appartient à un second signal, lequel second signal est pris à la sortie du circuit de retard à l'entrée duquel est appliqué le premier signal.
- Selon un mode de réalisation non couvert par les revendications, le premier évènement et le second évènement appartiennent à un même signal, lequel signal est généré par un générateur d'impulsions comportant le circuit de retard.
- Selon un mode de réalisation non couvert par les revendications, le circuit intégré comporte plusieurs circuits de retard, ledit procédé comprenant les étapes consistant à : - a) former une pluralité de générateurs d'impulsions, chaque générateur comportant un desdits circuits de retard, de sorte que le signal généré par ledit générateur présente un premier évènement et un second évènement généré par ledit circuit de retard ; - b) sélectionner, parmi la pluralité des générateurs, un premier générateur et générer un premier signal depuis ledit premier générateur ; - c) mesurer, au moyen du convertisseur TDC, la différence entre l'instant d'arrivée du premier évènement du premier signal et, l'instant d'arrivée du second évènement dudit premier signal ; - d) réitérer les étapes a) à c) pour tout ou partie des autres générateurs ; - e) générer la donnée unique propre au circuit intégré, en fonction d'une ou plusieurs des mesures successives du convertisseur TDC.
- Selon un mode de réalisation, le circuit intégré comporte plusieurs circuits de retard, ledit procédé comprenant les étapes consistant à : - a) former une pluralité de générateurs d'impulsions, chaque générateur comportant un desdits circuits de retard, le signal généré par chaque générateur se présentant sous la forme d'une double impulsion ou de multiples impulsions ; - b) sélectionner, parmi la pluralité des générateurs, un premier générateur et générer un premier signal depuis ledit premier générateur ; - b1) transformer ledit premier signal de manière à ce que le premier évènement et le second évènement appartiennent audit signal transformé ; - c) mesurer, au moyen du convertisseur TDC, la différence entre l'instant d'arrivée du premier évènement du premier signal transformé et, l'instant d'arrivée du second évènement dudit premier signal transformé ; - d) réitérer les étapes a) à c) pour tout ou partie des autres générateurs ; - e) générer la donnée unique propre au circuit intégré, en fonction d'une ou plusieurs des mesures successives du convertisseur TDC.
- Selon un mode de réalisation non couvert par les revendications, le circuit intégré comporte plusieurs circuits de retard, ledit procédé comprenant les étapes consistant à : - a) former une pluralité de générateurs d'impulsions, chaque générateur comportant un desdits circuits de retard, de sorte que le signal généré par ledit générateur présente un premier évènement et un second évènement généré par ledit circuit de retard ; - b) générer simultanément une pluralité de signaux depuis lesdits générateurs ; - c) mesurer, au moyen du convertisseur TDC, la différence entre l'instant d'arrivée du premier évènement d'un signal généré à l'étape b) et l'instant d'arrivée du second évènement dudit signal, laquelle mesure est réalisée simultanément pour la pluralité de signaux générés à l'étape b) ; - d) générer la donnée unique propre au circuit intégré, en fonction des mesures simultanées du convertisseur TDC.
- Selon un mode de réalisation le circuit intégré comporte plusieurs circuits de retard, ledit procédé comprenant les étapes consistant à : - a) former une pluralité de générateurs d'impulsions, chaque générateur comportant un desdits circuits de retard, le signal généré par chaque générateur se présentant sous la forme d'une double impulsion ou de multiples impulsions ; - b) générer simultanément une pluralité de signaux depuis lesdits générateurs ; - b1) transformer chaque signal de manière à ce que chaque signal transformé présente un premier évènement et un second évènement ; - c) mesurer, au moyen du convertisseur TDC, la différence entre l'instant d'arrivée du premier évènement d'un signal transformé à l'étape b1) et l'instant d'arrivée du second évènement dudit signal transformé, laquelle mesure est réalisée simultanément pour la pluralité de signaux transformés à l'étape b1) ; - d) générer la donnée unique propre au circuit intégré, en fonction des mesures simultanées du convertisseur TDC.
- Selon un mode de réalisation, la donnée unique propre au circuit intégré est générée par une opération mathématique ou une fonction mathématique à plusieurs variables appliquée aux différentes mesures du convertisseur TDC.
- Selon un mode de réalisation, on fait parcourir plusieurs fois un signal au travers du circuit de retard avant de faire la mesure par le convertisseur TDC.

Un autre aspect de l'invention concerne un circuit intégré en silicium comportant une fonction physiquement non clonable PUF permettant de générer une donnée unique propre audit circuit, lequel circuit comporte :
- un circuit de retard,
- un convertisseur TDC pour la mise en oeuvre de la fonction PUF, lequel convertisseur TDC est adapté pour mesurer :
- i) l'instant d'arrivée d'un premier évènement d'un signal à une entrée du convertisseur TDC et,
- ii) l'instant d'arrivée d'un second évènement d'un signal à une entrée du convertisseur TDC, lequel second évènement est généré par le circuit de retard.

Ce circuit comporte en outre les caractéristiques supplémentaires suivantes :
- au moins un générateur comportant le circuit de retard, lequel générateur est adapté pour générer un signal sous la forme d'une double impulsion ou de multiples impulsions,
- un moyen pour transformer ledit signal de manière à ce que le premier évènement et le second évènement appartiennent audit signal transformé.

Encore un autre aspect de l'invention concerne l'utilisation du circuit intégré pour générer un nombre aléatoire.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] précité est un diagramme illustrant le fonctionnement d'une PUF,
[Fig. 2a] est un bloc-diagramme illustrant un dispositif pour la mise en oeuvre d'un procédé, selon un premier mode de réalisation,
[Fig. 2b] est un diagramme de temps montrant la forme de signaux dans le dispositif de la figure 2a,
[Fig. 3a] est un bloc-diagramme illustrant un dispositif pour la mise en oeuvre d'un procédé, selon un deuxième mode de réalisation,
[Fig. 3b] est un diagramme de temps montrant la forme de signaux dans le dispositif de la figure 3a,
[Fig. 4a] est un bloc-diagramme illustrant un dispositif pour la mise en oeuvre d'un procédé, selon un troisième mode de réalisation,
[Fig. 4b] est un diagramme de temps montrant la forme de signaux dans le dispositif de la figure 4a,
[Fig. 5a] est un bloc-diagramme illustrant un dispositif pour la mise en oeuvre d'un procédé, selon un quatrième mode de réalisation,
[Fig. 5b] est un diagramme de temps montrant la forme de signaux dans le dispositif de la figure 5a,
[Fig. 6a] est un bloc-diagramme illustrant un dispositif pour la mise en oeuvre d'un procédé, selon un cinquième mode de réalisation,
[Fig. 6b] est un diagramme de temps montrant la forme de signaux dans le dispositif de la figure 6a,
[Fig. 7] est un bloc-diagramme illustrant un dispositif pour la mise en oeuvre d'un procédé, selon un sixième mode de réalisation,
[Fig. 8] est un bloc-diagramme illustrant un dispositif pour la mise en oeuvre d'un procédé, selon un septième mode de réalisation,
[Fig. 9a] est un bloc-diagramme illustrant un dispositif pour la mise en oeuvre d'un procédé, selon un huitième mode de réalisation,
[Fig. 9b] est un diagramme de temps montrant la forme de signaux dans le dispositif de la figure 9a,
[Fig. 10a] est un bloc-diagramme illustrant un dispositif pour la mise en oeuvre d'un procédé, selon un neuvième mode de réalisation,
[Fig. 10b] est un diagramme de temps montrant la forme de signaux dans le dispositif de la figure 10a.
[Fig. 11] est un bloc-diagramme illustrant un dispositif pour la mise en oeuvre d'un procédé, selon un dixième mode de réalisation,
[Fig. 12] est un bloc-diagramme illustrant un dispositif pour la mise en oeuvre d'un procédé, selon un onzième mode de réalisation.

### Description des modes de réalisation,

Le procédé et le système objets de l'invention engendrent des manipulations d'éléments physiques, notamment des signaux (électriques ou magnétiques) et des données, capables d'être stockés, transférés, combinés, comparés, ..., et permettant d'aboutir à un résultat souhaité.

Tel qu'utilisé ici, sauf indication contraire, l'utilisation des adjectifs ordinaux «*premier*»*,* «*deuxième*»*,* etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

La « *donnée unique* » propre au circuit intégrée et qui est générée selon le procédé objet de l'invention, peut notamment être comprise comme : un identifiant unique, une signature unique, une caractéristique intrinsèque du circuit intégré, une réponse à un challenge, etc. Ces termes sont équivalents et peuvent être utilisés indifféremment dans la présente description.

La mise en oeuvre du procédé objet de l'invention implique l'utilisation d'un « *circuit de retard* » du circuit intégré. Ce terme englobe notamment tout chemin de propagation dans le circuit, pouvant être constitué d'éléments passifs (résistances, capacités, inductances...), actifs (transistors, diodes, ...), complexes (optoélectronique, dispositifs électromécaniques...) ou tout assemblage de ces éléments au travers d'une ou plusieurs cellules logiques standards. Ce circuit de retard est une source d'entropie servant comme source de « fixation » de la variabilité du procédé de fabrication et pouvant être construit de diverses manières. Les différences de délais de propagation d'un signal peuvent résulter de variations de fabrication de différents éléments du circuit intégré. Ce sont notamment les variations de paramètres caractéristiques d'un ou plusieurs transistors utilisés dans le circuit de retard (variation de la longueur d'un canal, du dopage N, du dopage P, de la taille de la grille, de la tension de seuil...). Ces variations sont liées à la fabrication des couches les plus basses d'un circuit intégré (couches actives, oxyde, caissons...). La fabrication des couches de plus haut niveau (couches d'interconnexion et couches métal) peut également être sujette à des variations de fabrication. Il est donc envisageable d'utiliser des éléments résistifs (fils d'interconnexion) comme circuits de retard si ces éléments ont une variabilité plus importante que les transistors. Une combinaison de ces deux types de circuits de retard est aussi envisageable.

D'autres composants du circuit intégré qui contribuent aux variations de fabrication sont également envisageables. Par exemple la variation de la capacité d'une interconnexion résulte en une variation du temps de propagation au travers de celle-ci. Il est donc possible d'augmenter cette capacité avec des éléments susceptibles de varier lors de la fabrication pour créer les sources d'entropie (capacité MOS, MOM ou autre...).

Le choix du circuit de retard dépend notamment de la technologie utilisée. Pour augmenter l'efficacité du procédé et diminuer la taille des circuits de retard, il est avantageux de maximiser le ratio variabilité/délai.

La mise en oeuvre du procédé objet de l'invention implique également l'utilisation d'un TDC pour extraire/mesurer l'entropie du circuit de retard. De nombreuses architectures existent dans l'état de l'art. La plus courante est le vernier utilisant deux lignes de retard. Mais l'utilisation d'un TDC basé sur un anneau auto-séquencé (STR pour l'acronyme anglais « Self Time Ring ») est aussi envisageable de par sa simplicité d'implémentation, sa résolution facilement configurable et sa capacité à atteindre une résolution d'une dizaine de picosecondes en un temps très court.

Selon l'invention, le TDC sert à mesurer le temps entre deux évènements. Ces évènements peuvent être générés sous forme de signaux électriques par différents types de générateurs : oscillateurs en anneau, générateur d'impulsions, etc. Dans la suite de la description, les évènements à analyser correspondent à des fronts montants et/ou descendants. L'invention couvre toutefois d'autres types d'évènements, par exemple une ou plusieurs informations (ex : chiffre, lettre, code, ...) intégrées dans un signal. Le TDC mesure alors la différence entre les instants d'arrivée de ces informations.

Selon un mode préféré de réalisation, le TDC ne donne pas le temps/horaire d'arrivée de chaque front, mais réalise plutôt une mesure de l'espacement entre les deux fronts. En d'autres termes, le TDC ne compare pas des horaires d'arrivée de deux évènements, mais chronomètre la différence d'arrivée entre ces deux évènements. On s'affranchit ainsi de l'utilisation d'une référence (ou horloge commune) lors de la mesure. Il est toutefois envisageable d'utiliser un TDC qui récupère l'horaire d'arrivée de chaque évènement (« timestamp » en anglais) par rapport à une horloge de référence (interne au PUF/TDC, au système, ou externe) puis faire la soustraction des deux valeurs pour obtenir la valeur du délai mesuré.

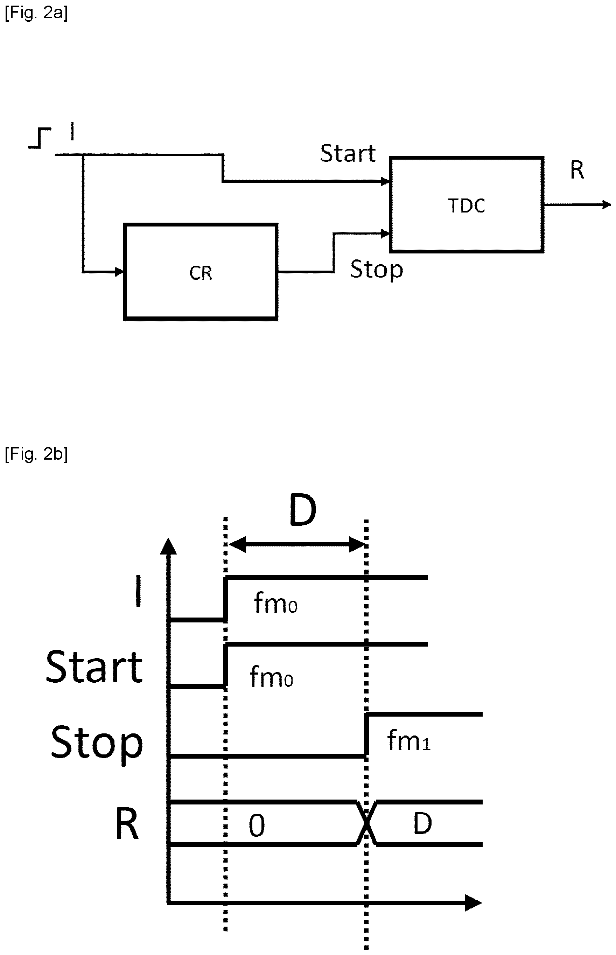

La figure 2a est un bloc-diagramme illustrant un dispositif pour la mise en oeuvre d'un procédé non couvert par les revendications, selon un premier mode de réalisation. Le dispositif comporte un circuit de retard CR et un TDC. Ces éléments permettent la mise en oeuvre de la fonction PUF du circuit intégré.

Le TDC comporte deux entrées : *Start* et *Stop.* Un signal d'activation I est appliqué à l'entrée *Start* du TDC. Ce signal I correspond à un premier signal. Ce même signal I est appliqué à l'entrée du circuit de retard CR. L'entrée *Stop* du TDC est connectée à la sortie du circuit de retard CR.

En se rapportant au diagramme de la figure 2b, le signal I présente un front montant fm₀. Ce front montant fm₀ correspond au premier évènement dont l'instant d'arrivée est mesuré par le TDC (à l'entrée *Start).*

Le circuit CR induit un retard au signal I de sorte que le front montant va arriver avec un délai D au niveau de l'entrée *Stop* du TDC. Ce front montant fm₁ généré par le circuit CR correspond au second évènement dont l'instant d'arrivée est mesuré par le TDC (à l'entrée *Stop).* Le signal retardé en sortie du circuit de retard CR correspond à un second signal.

Le TDC va ainsi mesurer le délai D entre les deux fronts montants - ou la différence des instants d'arrivée desdits fronts montants Δ(fm₁ ; fm₀). La valeur de ce délai D dépend des caractéristiques de fabrication intrinsèques au circuit de retard CR et donc du circuit intégré. La valeur de ce délai D correspond ici à la donnée unique propre au circuit intégré (R=D). On comprendra que le signal I pourrait comporter un front descendant à la place du front montant et que le TDC mesure les instants d'arrivée des fronts descendants.

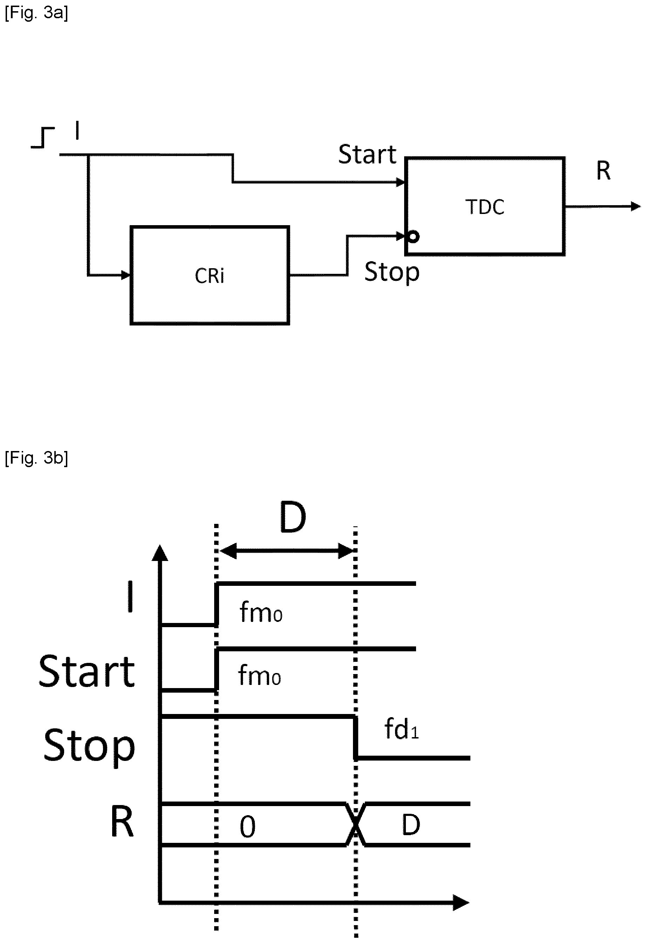

Le mode de réalisation de la figure 3a est similaire à celui de la figure 2a. Le circuit de retard CRi est toutefois configuré pour inverser le signal I (délai inverseur ; actif sur le front montant du signal d'activation I). Comme illustré sur la figure 3b, le signal en sortie du circuit CRi comprend alors un front descendant fd₁ qui est retardé par rapport au front montant fm₀. Le TDC va alors mesurer le délai D entre le front montant fm₀ (premier évènement du premier signal d'activation I arrivant à l'entrée *Start*) et le front descendant fd₁ (deuxième évènement du signal retardé arrivant à l'entrée *Stop)* - ou la différence des instants d'arrivée du front montant fm₀ et du front descendant fd₁. L'entrée *Start* du TDC est dans ce cas active sur front montant et l'entrée *Stop* active sur front descendant. Ici encore, on comprendra que le signal I pourrait comporter un front descendant à la place du front montant et que le TDC mesure les instants d'arrivée d'un front descendant à l'entrée *Start* et un front montant à l'entrée *Stop.*

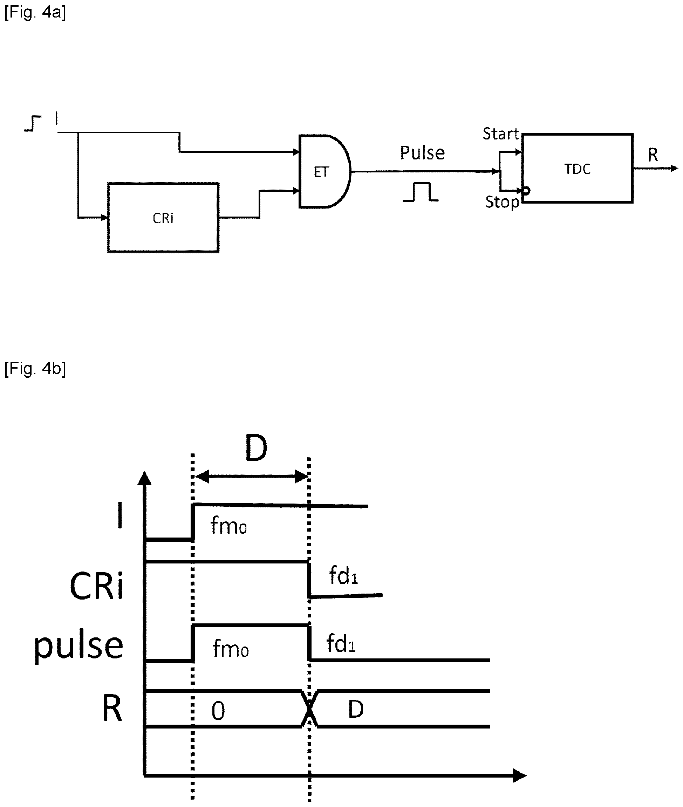

Dans le mode de réalisation de la figure 4a, une porte logique ET est interposée entre le TDC et le circuit de retard CRi. Le signal I est appliqué à une entrée de la porte ET. L'autre entrée de la porte ET est connectée à la sortie du circuit de retard CRi. La sortie de la porte ET est connectée aux entrées *Start* et *Stop* du TDC. Comme pour le mode de réalisation de la figure 3a, le circuit de retard CRi est configuré pour inverser le signal I (délai inverseur). Comme illustré sur la figure 4b, la combinaison de la porte ET et du circuit de retard CRi permet alors de générer une impulsion - ou signal référencé « *Pulse* » - présentant un front montant fm₀ et un front descendant fd₁ (générateur de pulse simple ou d'impulsion simple).

Le TDC mesure la largeur d'impulsion du signal *Pulse,* c'est-à-dire le délai D entre le front montant fm₀ (premier évènement du signal *Pulse* arrivant à l'entrée *Start)* et le front descendant fd₁ (second évènement du même signal *Pulse* arrivant à l'entrée *Stop)* du signal *Pulse* - ou la différence des instants d'arrivée du front montant fm₀ et du front descendant fd₁. L'entrée *Start* du TDC est dans ce cas active sur front montant et l'entrée *Stop* active sur front descendant. Ici encore, on comprendra que le signal I pourrait comporter un front descendant à la place du front montant et que le TDC mesure les instants d'arrivée d'un front descendant à l'entrée *Start* et un front montant à l'entrée *Stop.*

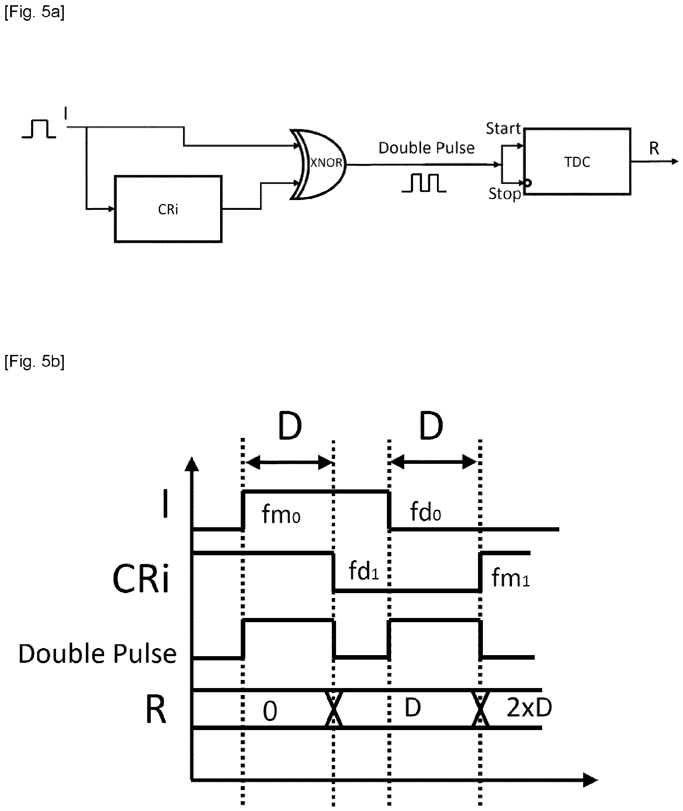

Le mode de réalisation de la figure 5a correspond à celui de la figure 4a, la porte ET étant toutefois remplacée par une porte NON-OU exclusif (porte XNOR). Comme illustré sur la figure 5b, le signal d'activation I est un signal présentant un front montant fm₀ et un front descendant fd₀ qui lui succède (l'inverse étant envisageable). À la sortie du circuit de retard CRi, le front montant fm₀ est transformé en un front descendant fd₁, et le front descendant fd₀ est transformé en un front montant fm₁. La combinaison de porte XNOR et du circuit de retard CRi permet de générer une double impulsion - ou signal *Double Pulse* (générateur de double pulse ou de double impulsions). Chaque impulsion a la même largeur et présente un front montant et un front descendant.

Le TDC mesure la largeur de chaque impulsion positive du signal *Double Pulse,* c'est-à-dire le délai D entre un front montant (premier évènement du signal *Double Pulse* arrivant à l'entrée *Start)* et un front descendant successif (second évènement du même signal *Double Pulse* arrivant à l'entrée *Stop)* du signal *Double Pulse* - ou la différence des instants d'arrivée du front montant et du front descendant de chaque impulsion à l'état haut. Si le TDC n'est pas réinitialisé entre les deux impulsions, la valeur de sa mesure correspond à la somme des largeurs de ces deux impulsions successives (R=2xD).

Comparée au mode de réalisation de la figure 4a, la mesure réalisée par le TDC dans la configuration de la figure 5a est plus stable. En effet, la redondance des valeurs mesurées (largeur de deux impulsions supérieure à la largeur d'une seule impulsion) permet d'augmenter le rapport signal sur bruit.

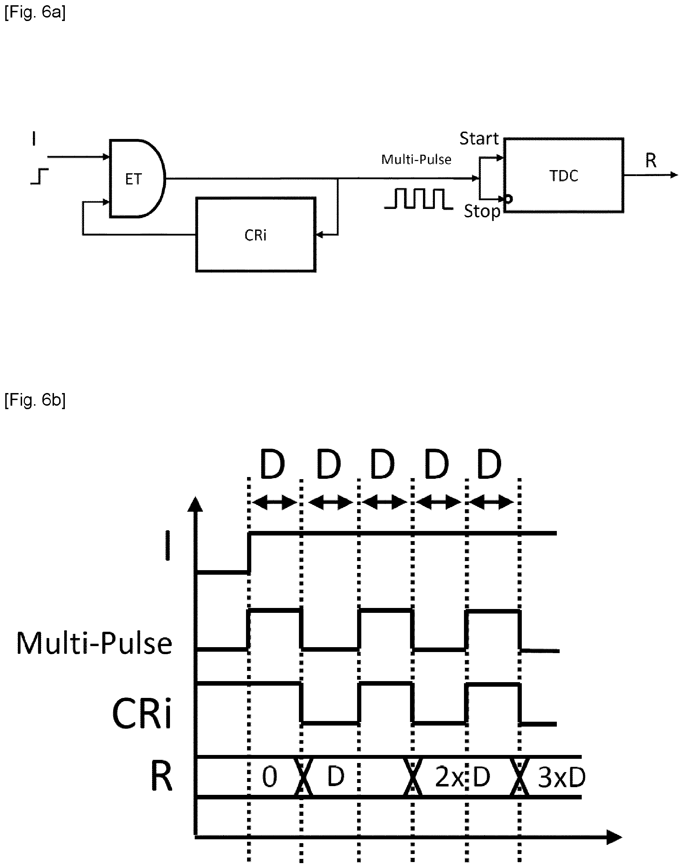

Dans le mode de réalisation de la figure 6a, le signal I est appliqué à une entrée d'une porte ET. La sortie de la porte ET est connectée d'une part à l'entrée du circuit de retard CRi (délai inverseur) et d'autre part aux entrées *Start* et *Stop* du TDC. La sortie du circuit de retard CRi est connectée à l'autre entrée de la porte ET. Comme illustré sur la figure 6b, la combinaison de la porte ET et du circuit de retard Cri, habituellement dénommé oscillateur en anneau, permet alors de générer de multiple impulsions - ou signal *Multi-Pulse* - ayant chacune la même largeur et présentant un front montant et un front descendant (générateur multi-impulsions).

Contrairement aux autres générateurs d'impulsion décrits en référence aux figures 4a-4b et 5a-5b, on obtient un système rebouclé qui oscille indéfiniment lorsqu'il est activé, équivalant à un oscillateur en anneaux actif sur niveau haut du signal d'activation I. Sa période d'oscillation est T = 2xD où D est la largeur d'impulsion positive ou la demi-période d'oscillation positive générée tant que le signal d'activation I est à l'état haut.

Le TDC mesure la largeur de chaque impulsion positive du signal *Multi-Pulse,* c'est-à-dire le délai D entre un front montant (premier évènement du signal *Multi-Pulse* arrivant à l'entrée *Start)* et le front descendant suivant (second évènement du même signal *Multi-Pulse* arrivant à l'entrée *Stop)* - ou la différence des instants d'arrivée du front montant et du front descendant de chaque impulsion à l'état haut. Si le TDC n'est pas réinitialisé entre deux impulsions hautes successives, la valeur de sa mesure (R) correspond à la somme des largeurs de ces impulsions hautes successives, ou à la somme des demi-périodes d'oscillation du signal *Multi-Pulse.* La redondance des valeurs mesurées permet d'augmenter encore davantage le rapport signal sur bruit et la stabilité de la mesure du TDC.

Un résultat similaire est obtenu avec un signal I présentant un niveau bas et une porte OU à la place de la porte ET.

Selon un mode de réalisation, l'identifiant unique R (calculé selon les modes des figures 2a à 6a), peut être comparé à une valeur de référence. Cette dernière est préférentiellement une valeur fixe, invariable, et ne dépend pas des conditions d'utilisation du circuit telles que la température. La valeur de référence est par exemple calculée théoriquement (a priori), ou estimée à partir de la mesure de nombreux échantillons (valeur moyenne). Un comparateur peut être intégré dans le circuit intégré de sorte que la comparaison est réalisée in situ, la valeur de référence étant stockée dans une mémoire dudit circuit. Le comparateur peut également être situé en dehors du circuit intégré, auquel cas la comparaison est réalisée ex-situ, la valeur de référence étant stockée dans une mémoire déportée dudit circuit. Cette comparaison peut notamment être utilisée dans le cadre d'une surveillance et/ou d'un contrôle des procédés de fabrication. Le résultat de la comparaison permet, par exemple, de caractériser la qualité de la fabrication du circuit intégré et d'en déduire des compensations nécessaires pour faire fonctionner ledit circuit de manière optimale (réglage de la tension ou de la fréquence par exemple). La comparaison in situ est utilisée dans ce cas. Le résultat de la comparaison ex-situ peut être utilisé pour classer et trier les circuits intégrés (ex : circuits rapides ou non) lors de la fabrication, par exemple pour les vendre comme des produits différents, en garantissant des performances différentes.

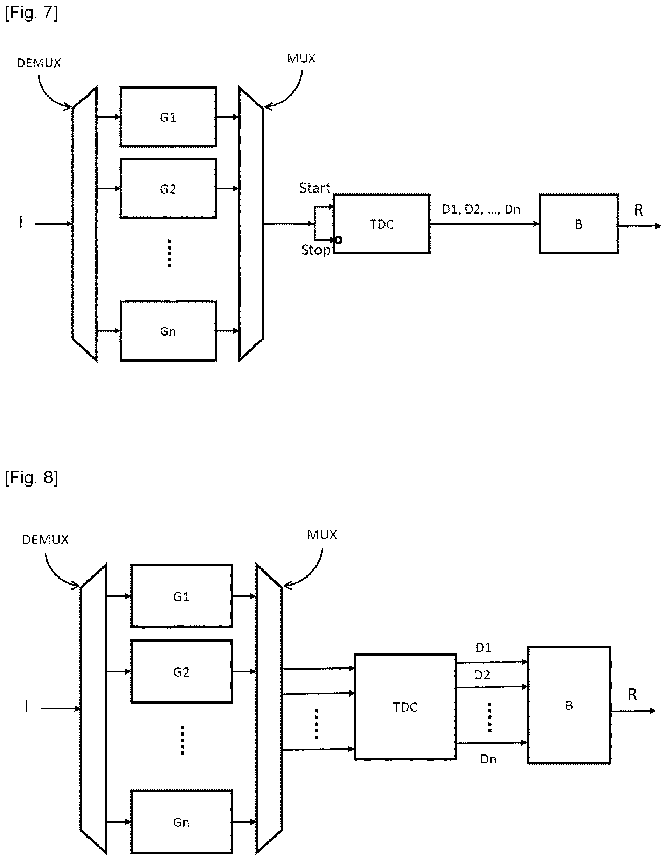

Dans le mode de réalisation de la figure 7, le dispositif comporte plusieurs générateurs d'impulsions G1, G2, ..., Gn (n étant un nombre entier égal ou supérieur à 2). Ces générateurs peuvent être de même type ou de types différents : générateur(s) d'impulsion simple du type représenté sur la figure 4a ; générateur(s) de double impulsions du type représenté sur la figure 5a ; générateur(s) multi-impulsions du type représenté sur la figure 6a, ou autre. Chaque générateur comporte un circuit de retard de sorte que le signal généré par un générateur présente un premier évènement et un second évènement généré par ledit circuit de retard.

Les entrées des générateurs G1, G2, ..., Gn sont reliées aux sorties d'un démultiplexeur DEMUX. Les sorties des générateurs G1, G2, ..., Gn sont reliées aux entrées d'un multiplexeur MUX.

Le démultiplexeur DEMUX permet d'injecter le signal d'activation I dans l'un des générateurs G1, G2, ..., Gn sélectionné. Ce démultiplexeur est toutefois optionnel, le signal d'activation I pouvant être injecté simultanément dans chacun des générateurs G1, G2, ..., Gn. Ce signal d'activation I est du type décrit précédemment.

Le multiplexeur MUX permet d'envoyer le signal généré par le générateur sélectionné aux entrées *Start* et *Stop* du TDC. Selon sa forme, ce signal comporte un ou plusieurs premiers évènements (ex : fronts montants) et un ou plusieurs seconds évènements (ex : fronts descendants). Le TDC mesure alors les différences des instants d'arrivée de ces événements. En sélectionnant successivement tout ou partie des autres générateurs G1, G2, ..., Gn, le TDC va pouvoir mesurer successivement plusieurs délais D1, D2, ..., Dn qui sont transmis successivement à un bloc fonctionnel B. Celui-ci est adapté pour construire une réponse R à partir d'une ou plusieurs de ces mesures (2, 3, 4, ..., n).

Cette réponse R est sensiblement plus complexe et plus robuste aux attaques que celles obtenues selon les modes de réalisation précédents. Elle peut par exemple être construite par une opération mathématique appliquée aux délais mesurés D1, D2, ..., Dn : addition des délais, comparaison desdits délais entre eux (qui est le plus rapide ?), soustraction desdits délais (quelle est la différence de temps de propagation de deux délais ?), comparaison ou soustraction desdits délais à une valeur de référence, division desdits délais (quel est le rapport entre deux délais ?) ; ou par une fonction mathématique à plusieurs variables appliquée auxdits délais mesurés.

La donnée générée par le bloc B (réponse R) convient particulièrement à l'identification et/ou l'authentification de matériel électronique, au stockage sécurisé de clés de chiffrement, au couplage matériel-logiciel, à la lutte contre la contrefaçon, etc. En effet, la donnée R peut être exprimée sur plusieurs bits, devenant de fait davantage sécurisée (imprédictible et non reproductible). Les résultats de l'opération mathématique appliquée aux délais successifs mesurés D1, D2, ..., Dn peuvent notamment être concaténés pour construire une donnée propre unique sur un nombre de bits nécessaire à une application (par exemple 128 bits pour une clé de chiffrement AES, 2048 bits pour le chiffrement RSA).

Les mesures faites par le TDC sont éventuellement dépendantes des conditions d'utilisation du circuit (par exemple la température ou la tension d'alimentation). La comparaison de deux mesures (mesure différentielle) va permettre d'annuler les variations induites par les conditions d'utilisation. On s'affranchit ainsi de l'utilisation d'un quelconque moyen de compensation ou d'analyse de ces variations induites par les conditions d'utilisation.

Le mode de réalisation de la figure 8 est similaire à celui de la figure 7. Le TDC comporte toutefois plusieurs entrées/sorties permettant de mesurer simultanément plusieurs délais D1, D2, ..., Dn et de transmettre simultanément ces mesures au bloc fonctionnel B. Ce dernier comporte à cet effet plusieurs entrées. Les mesures réalisées par le TDC sont de fait plus rapides, car simultanées. De même, le bloc B peut traiter les différentes mesures simultanément et non plus de manière successive, et donc générer une réponse R plus rapidement. Ce mode de réalisation est aussi moins sensible aux conditions d'utilisation, car les mesures sont faites simultanément.

Quel que soit le mode de réalisation, le TDC permet de mesurer des temps de propagation dans chaque circuit de retard. Cette mesure n'a pas besoin d'être absolue. Il est donc possible de simplifier le TDC de manière à obtenir une valeur relative pour chaque mesure. Il est aussi possible de ne récupérer qu'un modulo ou autre partie de la mesure (en appliquant par exemple un filtrage des bits de poids faibles). Cela permet de simplifier la structure du TDC pour réduire sa consommation et sa surface, tout en conservant une bonne entropie dans les réponses de la PUF.

Il est aussi possible d'utiliser la partie non-déterministe (la partie qui change à chaque mesure d'un même délai) des réponses de la PUF comme une source de nombres aléatoires. Le dispositif devient alors non seulement un générateur d'identifiant (PUF) mais aussi un générateur de nombres aléatoires (TRNG).

Enfin, il est possible d'ajouter un bloc de « mise en forme », avant le TDC, qui permet de retravailler les signaux à analyser. On augmente alors le ratio signal sur bruit. Par exemple, il est possible de faire parcourir plusieurs fois le signal au travers du même circuit de retard avant de faire la mesure par le TDC. Cela permet de diminuer l'impact du bruit sur la mesure. En effet, le ratio signal sur bruit évolue en √N (N étant le nombre de fois que le même circuit de retard est parcouru par le signal).

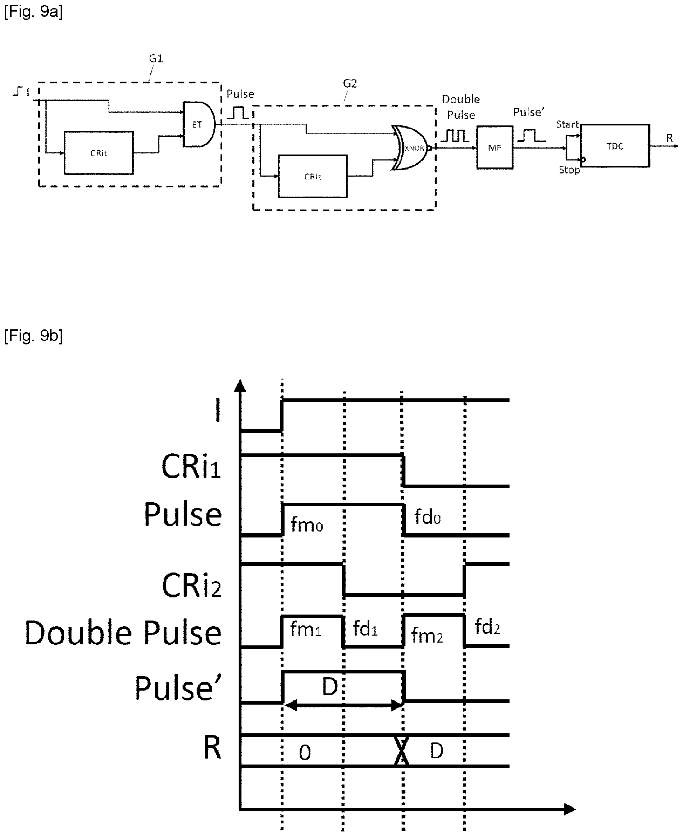

D'autres modes de réalisation utilisant un bloc de « mise en forme » sont illustrés sur les figures 9a à 11. Il probable qu'un front montant et un front descendant ne se propagent pas à la même vitesse dans le circuit intégré. Ainsi, plus le signal d'activation I est généré à distance du TDC, plus l'impulsion générée va réduire ou augmenter en largeur. Il existe donc un risque d'introduire une corrélation directe entre la source sélectionnée et la réponse obtenue (entre le challenge et la réponse), de sorte qu'un attaquant pourra plus facilement prédire la signature du circuit intégré. Aussi, un bloc de mise en forme MF est avantageusement utilisé pour pallier à cet état des choses.

Sur les figures 9a et 9b, un premier générateur d'impulsion simple G1, du type décrit en référence à la figure 4a, permet de générer une impulsion simple - signal *Pulse* - présentant un front montant fm₀ et un front descendant fd₀. Un second générateur de double impulsion G2, du type décrit en référence à la figure 5a, permet de transformer le signal *Pulse* en une double impulsion - signal *Double Pulse.* Chaque impulsion présentant un front montant fm₁, respectivement fm₂, et un front descendant fd₁, respectivement fd₂. Même si la largeur de ces impulsions peut être dépendante de la distance parcourue et/ou de la topologie des chemins, la distance entre deux impulsions successives reste constante, les fronts de même type (montant ou descendant) se propagent à la même vitesse. Ainsi, on peut propager ces impulsions sur de relatives longues distances avant d'atteindre le TDC.

Le bloc MF est installé en amont du TDC et connecté aux entrées de celui-ci. Le bloc MF est adapté pour transformer la double impulsion en impulsion simple - signal *Pulse'.* Le bloc MF peut notamment être actif sur les fronts montants fm₁, fm₂ (ou descendants fd₁, fd₂). Cette transformation peut par exemple être réalisée au moyen d'une bascule montée en diviseur, de manière à ne faire passer que les fronts montants (respectivement descendants) tout en inversant les fronts pairs : le front montant fm₁ est transmis normalement (c'est le premier évènement dont l'instant d'arrivée est mesuré par le TDC), le front montant suivant fm₂ est inversé pour être transformé en front descendant (c'est le second évènement dont l'instant d'arrivée est mesuré par le TDC). Et ainsi de suite.

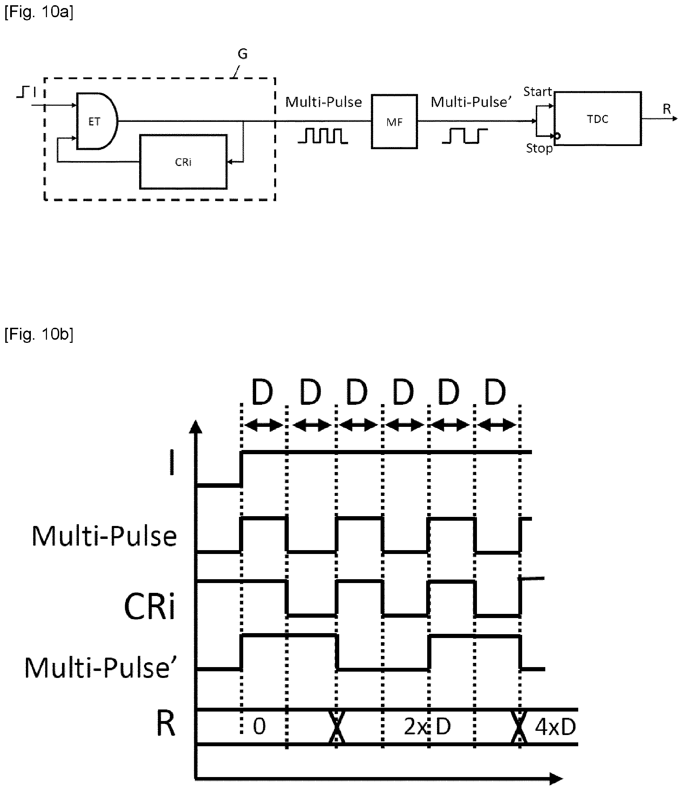

Dans le mode de réalisation des figures 10a et 10b, un générateur multi-impulsion G, du type décrit en référence à la figure 6a, permet de générer de multiples impulsions - signal *Multi-Pulse.* Le bloc MF est actif sur les fronts montants (ou descendants), de manière à ne faire passer que les fronts montants (respectivement descendants) tout en inversant les fronts pairs (signal *Multi-Pulse'*)*.* Chaque impulsion du signal *Multi-Pulse'* présente un front montant (premier évènement dont l'instant d'arrivée est mesuré par le TDC) et un front descendant (second évènement dont l'instant d'arrivée est mesuré par le TDC). Ce front descendant résulte de la transformation d'un front montant comme expliqué précédemment.

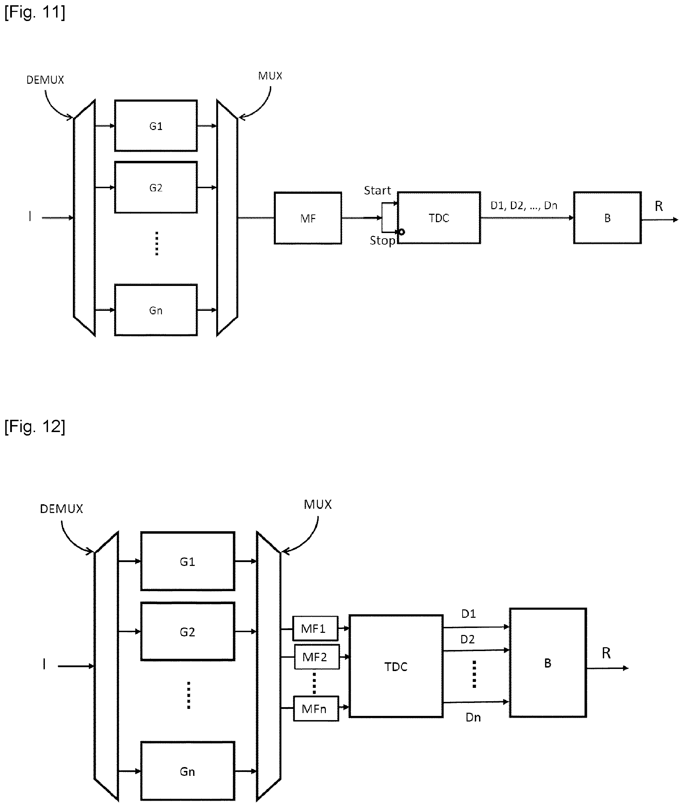

La figure 11 schématise une architecture similaire à celle de la figure 7, mais où le bloc MF est installé entre le multiplexeur MUX et le TDC. Chacun des générateurs G1, G2, ..., Gn génère un signal se présentant sous la forme d'une double impulsion ou de multiples impulsions. Le bloc MF transforme chaque signal de sorte que celui-ci présente un ou plusieurs premiers évènements (ex : fronts montants) et un ou plusieurs seconds événements (ex : fronts descendants) dont les instants d'arrivée seront mesurés par le TDC. Les délais D1, D2, ..., Dn ainsi mesurés sont ensuite transmis successivement au bloc fonctionnel B, la donnée R étant générée de la même façon que celle décrite en référence à la figure 7.

La figure 12 schématise une architecture similaire à celle de la figure 8. Chaque entrée du TDC est toutefois associée à un bloc de mise en forme MF1, MF2,..., MFn. Chaque signal (double impulsion ou multiples impulsions) en sortie du multiplexeur MUX est alors préalablement transformé avant d'entrer dans le TDC. Chaque bloc MF1, MF2,..., MFn transforme le signal correspondant de sorte que celui-ci présente un ou plusieurs premiers évènements (ex : fronts montants) et un ou plusieurs seconds événements (ex : fronts descendants) dont les instants d'arrivée seront mesurés par le TDC. Les délais D1, D2, ..., Dn ainsi mesurés sont ensuite transmis simultanément au bloc fonctionnel B, la donnée R étant générée de la même façon que celle décrite en référence à la figure 8.

De manière générale, et quel que soit le mode de réalisation, la mise en forme du signal par le bloc MF, avant sa mesure par le TDC, permet d'annuler, ou à tout le moins de limiter, tout déterminisme dans la réponse du PUF. Toutes les variations amenées par les chemins de propagation entre la source du signal d'activation I et le TDC sont communes à toutes les sources/challenges et n'influent pas sur l'unicité de la réponse R. Cette dernière est alors plus stable et plus robuste aux attaques.

L'agencement des différents éléments et/ou moyens et/ou étapes de l'invention, dans les modes de réalisation décrits ci-dessus, ne doit pas être compris comme exigeant un tel agencement dans toutes les implémentations. Notamment, dans les exemples précités, le TDC mesure des impulsions positives. Le TDC peut toutefois être configuré pour mesurer des impulsions négatives.

En tout état de cause, une ou plusieurs caractéristiques et/ou étapes exposées seulement dans un mode de réalisation peuvent être généralisées aux autres modes de réalisation. De même, une ou plusieurs caractéristiques et/ou étapes exposées seulement dans un mode de réalisation peuvent être combinées avec une ou plusieurs autres caractéristiques et/ou étapes exposées seulement dans un autre mode de réalisation.

## Revendications

1. Procédé pour générer une donnée unique (R) propre à un circuit intégré en silicium, ladite donnée étant générée par l'application d'une fonction physiquement non clonable PUF dudit circuit, lequel circuit comporte un circuit de retard (CR, CRi), la mise en oeuvre de la fonction PUF comprend une étape consistant à mesurer, au moyen d'un convertisseur TDC, la différence entre :
- i) l'instant d'arrivée d'un premier évènement d'un signal à une entrée (Start) du convertisseur TDC et,
- ii) l'instant d'arrivée d'un second évènement d'un signal à une entrée (Stop) du convertisseur TDC, lequel second évènement est généré par le circuit de retard (CR, CRi),
**caractérisé en ce que** ledit procédé comprend en outre les étapes consistant à :
- générer, au moyen d'au moins un générateur (G1, G2, G) comportant le circuit de retard (CR, CRi), un signal sous la forme d'une double impulsion ou de multiples impulsions,
- transformer ledit signal de manière à ce que le premier évènement et le
second évènement appartiennent audit signal transformé.

2. Procédé selon la revendication 1, dans lequel le circuit intégré comporte plusieurs circuits de retard, ledit procédé comprenant les étapes consistant à :
- a) former une pluralité de générateurs d'impulsions (G1, G2, ..., Gn), chaque générateur comportant un desdits circuits de retard, le signal généré par chaque générateur se présentant sous la forme d'une double impulsion ou de multiples impulsions,
- b) sélectionner, parmi la pluralité des générateurs (G1, G2, ..., Gn), un premier générateur et générer un premier signal depuis ledit premier générateur,
- b1) transformer ledit premier signal de manière à ce que le premier évènement et le second évènement appartiennent audit signal transformé,
- c) mesurer, au moyen du convertisseur TDC, la différence entre l'instant d'arrivée du premier évènement du premier signal transformé et, l'instant d'arrivée du second évènement dudit premier signal transformé,
- d) réitérer les étapes a) à c) pour tout ou partie des autres générateurs (G1, G2, ..., Gn),
- e) générer la donnée unique (R) propre au circuit intégré, en fonction d'une ou plusieurs des mesures successives (D1, D2, ..., Dn) du convertisseur TDC.

3. Procédé selon la revendication 1, dans lequel le circuit intégré comporte plusieurs circuits de retard, ledit procédé comprenant les étapes consistant à :
- a) former une pluralité de générateurs d'impulsions (G1, G2, ..., Gn), chaque générateur comportant un desdits circuits de retard, le signal généré par chaque générateur se présentant sous la forme d'une double impulsion ou de multiples impulsions,
- b) générer simultanément une pluralité de signaux depuis lesdits générateurs,
- b1) transformer chaque signal de manière à ce que chaque signal transformé présente un premier évènement et un second évènement,
- c) mesurer, au moyen du convertisseur TDC, la différence entre l'instant d'arrivée du premier évènement d'un signal transformé à l'étape b1) et l'instant d'arrivée du second évènement dudit signal transformé, laquelle mesure est réalisée simultanément pour la pluralité de signaux transformés à l'étape b1),
- d) générer la donnée unique (R) propre au circuit intégré, en fonction des mesures simultanées (D1, D2, ..., Dn) du convertisseur TDC.

4. Procédé selon la revendication 1 dans lequel la donnée unique (R) propre au circuit intégré est générée par une opération mathématique ou une fonction mathématique à plusieurs variables appliquée aux différentes mesures du convertisseur TDC.

5. Procédé selon l'une des revendications précédentes, dans lequel on fait parcourir plusieurs fois un signal au travers du circuit de retard avant de faire la mesure par le convertisseur TDC.

6. Circuit intégré en silicium comportant une fonction physiquement non clonable PUF permettant de générer une donnée unique (R) propre audit circuit, lequel circuit comporte :
- un circuit de retard (CR, CRi),
- un convertisseur TDC pour la mise en oeuvre de la fonction PUF, lequel convertisseur TDC est adapté pour mesurer :
- i) l'instant d'arrivée d'un premier évènement d'un signal à une entrée du convertisseur TDC et,
- ii) l'instant d'arrivée d'un second évènement d'un signal à une entrée du convertisseur TDC, lequel second évènement est généré par le circuit de retard,
**caractérisé en ce que** ledit circuit comprend en outre :
- au moins un générateur (G1, G2, G) comportant le circuit de retard (CR, CRi), lequel générateur est adapté pour générer un signal sous la forme d'une double impulsion ou de multiples impulsions,
- un moyen pour transformer ledit signal de manière à ce que le premier évènement et le second évènement appartiennent audit signal transformé.

7. Utilisation du circuit intégré selon la revendication 6, pour générer un nombre aléatoire.

## Patentansprüche

1. Verfahren zum Generieren eines einer integrierten Schaltung aus Silicium eigenen Einzeldatenwerts (R), wobei der Datenwert durch die Anwendung einer physikalisch nicht klonbaren Funktion PUF der Schaltung generiert wird, welche Schaltung eine Verzögerungsschaltung (CR, CRi) aufweist, die Durchführung der Funktion PUF einen Schritt enthält, der darin besteht, mittels eines TDC-Wandlers die Differenz zu messen zwischen:
- i) dem Ankunftszeitpunkt eines ersten Ereignisses eines Signals an einem Eingang (Start) des TDC-Wandlers und
- ii) dem Ankunftszeitpunkt eines zweiten Ereignisses eines Signals an einem Eingang (Stop) des TDC-Wandlers, welches zweite Ereignis von der Verzögerungsschaltung (CR, CRi) generiert wird,
**dadurch gekennzeichnet, dass** das Verfahren außerdem die Schritte enthält, die darin bestehen:
- mittels mindestens eines die Verzögerungsschaltung (CR, CRi) aufweisenden Generators (G1, G2, G) ein Signal in Form eines Doppelimpulses oder vieler Impulse zu generieren,
- das Signal so umzuformen, dass das erste Ereignis und das zweite Ereignis zum umgeformten Signal gehören.

2. Verfahren nach Anspruch 1, wobei die integrierte Schaltung mehrere Verzögerungsschaltungen aufweist, wobei das Verfahren die Schritte enthält, die darin bestehen:
- a) eine Vielzahl von Impulsgeneratoren (G1, G2, ..., Gn) zu formen, wobei jeder Generator eine der Verzögerungsschaltungen aufweist, wobei das von jedem Generator generierte Signal in Form eines Doppelimpulses oder vieler Impulse vorliegt,
- b) unter der Vielzahl der Generatoren (G1, G2, ..., Gn) einen ersten Generator auszuwählen und ein erstes Signal ausgehend von dem ersten Generator zu generieren,
- b1) das erste Signal so umzuformen, dass das erste Ereignis und das zweite Ereignis zum umgeformten Signal gehören,
- c) mittels des TDC-Wandlers die Differenz zwischen dem Ankunftszeitpunkt des ersten Ereignisses des ersten umgeformten Signals und dem Ankunftszeitpunkt des zweiten Ereignisses des ersten umgeformten Signals zu messen,
- d) die Schritte a) bis c) für alle oder einen Teil der anderen Generatoren (G1, G2, ..., Gn) zu wiederholen,
- e) den der integrierten Schaltung eigenen Einzeldatenwert (R) abhängig von einer oder mehreren der aufeinanderfolgenden Messungen (D1, D2, ..., Dn) des TDC-Wandlers zu generieren.

3. Verfahren nach Anspruch 1, wobei die integrierte Schaltung mehrere Verzögerungsschaltungen aufweist, wobei das Verfahren die Schritte enthält, die darin bestehen:
- a) eine Vielzahl von Impulsgeneratoren (G1, G2, ..., Gn) zu formen, wobei jeder Generator eine der Verzögerungsschaltungen aufweist, wobei das von jedem Generator generierte Signal in Form eines Doppelimpulses oder vieler Impulse vorliegt,
- b) gleichzeitig eine Vielzahl von Signalen ausgehend von den Generatoren zu generieren,
- b1) jedes Signal so umzuformen, dass jedes umgeformte Signal ein erstes Ereignis und ein zweites Ereignis aufweist,
- c) mittels des TDC-Wandlers die Differenz zwischen dem Ankunftszeitpunkt des ersten Ereignisses eines im Schritt b1) umgeformten Signals und dem Ankunftszeitpunkt des zweiten Ereignisses des umgeformten Signals zu messen, welche Messung gleichzeitig für die Vielzahl von im Schritt b1) umgeformten Signalen durchgeführt wird,
- d) den der integrierten Schaltung eigenen Einzeldatenwert (R) abhängig von den gleichzeitigen Messungen (D1, D2, ..., Dn) des TDC-Wandlers zu generieren.

4. Verfahren nach Anspruch 1, wobei der der integrierten Schaltung eigene Einzeldatenwert (R) durch eine mathematische Operation oder eine mathematische Funktion mit mehreren Variablen generiert wird, die an die verschiedenen Messungen des TDC-Wandlers angewendet wird.

5. Verfahren nach einem der vorhergehenden Anspruche, wobei mehrere Male ein Signal durch die Verzögerungsschaltung geschickt wird, ehe die Messung durch den TDC-Wandler durchgeführt wird.

6. Integrierte Schaltung aus Silicium, die eine physikalisch nicht klonbare Funktion PUF aufweist, die es ermöglicht, einen der Schaltung eigenen Einzeldatenwert (R) zu generieren, welche Schaltung aufweist:
- eine Verzögerungsschaltung (CR, CRi),
- einen TDC-Wandler zur Durchführung der Funktion PUF, welcher TDC-Wandler geeignet ist, zu messen:
- i) den Ankunftszeitpunkt eines ersten Ereignisses eines Signals an einem Eingang des TDC-Wandlers und
- ii) den Ankunftszeitpunkt eines zweiten Ereignisses eines Signals an einem Eingang des TDC-Wandlers, welches zweite Ereignis von der Verzögerungsschaltung generiert wird,
**dadurch gekennzeichnet, dass** die Schaltung außerdem enthält:
- mindestens einen die Verzögerungsschaltung (CR, CRi) aufweisenden Generator (G1, G2, G), welcher Generator geeignet ist, ein Signal in Form eines Doppelimpulses oder vieler Impulse zu generieren,
- eine Einrichtung, um das Signal so umzuformen, dass das erste Ereignis und das zweite Ereignis zum umgeformten Signal gehören.

7. Verwendung der integrierten Schaltung nach Anspruch 6 zum Generieren einer Zufallszahl.

## Claims

1. Method for generating a unique datum (R) which is specific to a silicon integrated circuit, said datum being generated by applying a physically unclonable function PUF of said circuit, which circuit comprises a delay circuit (CR, CRi), implementing the PUF function comprises a step consisting in measuring, by means of a TDC converter, the difference between:
- i) the time of arrival of a first event of a signal at one input (Start) of the TDC converter, and
- ii) the time of arrival of a second event of a signal at one input (Stop) of the TDC converter, which second event is generated by the delay circuit (CR, CRi),
**characterized in that** said method further comprises the steps consisting in:
- generating, by means of at least one generator (G1, G2, G) comprising the delay circuit (CR, CRi), a signal in the form of a double pulse or of multiple pulses,
- transforming said signal so that the first event and the second event belong to said transformed signal.

2. Method according to Claim 1, in which the integrated circuit comprises several delay circuits, said method comprising the steps consisting in:
- a) forming a plurality of pulse generators (G1, G2, ..., Gn), each generator comprising one of said delay circuits, the signal generated by each generator being in the form of a double pulse or of multiple pulses,
- b) selecting, from among the plurality of generators (G1, G2, ..., Gn), a first generator and generating a first signal from said first generator,
- b1) transforming said first signal so that the first event and the second event belong to said transformed signal,
- c) measuring, by means of the TDC converter, the difference between the time of arrival of the first event of the first transformed signal and the time of arrival of the second event of said first transformed signal,
- d) reiterating steps a) to c) for all or some of the other generators (G1, G2, ..., Gn),
- e) generating the unique datum (R) which is specific to the integrated circuit, as a function of one or more of the successive measurements (D1, D2, ..., Dn) of the TDC converter.

3. Method according to Claim 1, in which the integrated circuit comprises several delay circuits, said method comprising the steps consisting in:
- a) forming a plurality of pulse generators (G1, G2, ..., Gn), each generator comprising one of said delay circuits, the signal generated by each generator being in the form of a double pulse or of multiple pulses,
- b) simultaneously generating a plurality of signals from said generators,
- b1) transforming each signal so that each transformed signal has a first event and a second event,
- c) measuring, by means of the TDC converter, the difference between the time of arrival of the first event of a signal transformed in step b1) and the time of arrival of the second event of said transformed signal, which measurement is made simultaneously for the plurality of signals transformed in step b1),
- d) generating the unique datum (R) which is specific to the integrated circuit, as a function of the simultaneous measurements (D1, D2, ..., Dn) of the TDC converter.

4. Method according to Claim 1, in which the unique datum (R) which is specific to the integrated circuit is generated by a mathematical operation or a mathematical function of several variables which is applied to the various measurements of the TDC converter.

5. Method according to one of the preceding claims, in which a signal is made to travel several times through the delay circuit before making the measurement by the TDC converter.

6. Silicon integrated circuit comprising a physically unclonable function PUF making it possible to generate a unique datum (R) which is specific to said circuit, which circuit comprises:
- a delay circuit (CR, CRi),
- a TDC converter for implementing the PUF function, which TDC converter is suitable for measuring:
- i) the time of arrival of a first event of a signal at one input of the TDC converter, and
- ii) the time of arrival of a second event of a signal at one input of the TDC converter, which second event is generated by the delay circuit,
**characterized in that** said circuit further comprises:
- at least one generator (G1, G2, G) comprising the delay circuit (CR, CRi), which generator is suitable for generating a signal in the form of a double pulse or of multiple pulses,
- a means for transforming said signal so that the first event and the second event belong to said transformed signal.

7. Use of the integrated circuit according to Claim 6, for generating a random number.
